# EUROPEAN PATENT APPLICATION

(11) **EP 3 643 168 A1**
(43) Date of publication of application: **29.04.2020**
(21) Application number: 19160050.1
(22) Date of filing: 28.02.2019
(51) Int. Cl.: A01K 5/02

(54) **FEEDER**

(30) Priority: 24.10.2018 CN 201821731042 U
(71) Applicant: Hong Kong Minsheng Big Data Co., Limited, Central, Hong Kong (HK)
(72) Inventor: WANG, Qing, Central, Hong Kong (HK); SCHMIDT, Marcio Afonso, Central, Hong Kong (HK); YANG, Xiang, Central, Hong Kong (HK)
(74) Representative: Aera A/S

(57) **Abstract**

A feeder (3) comprising: a feed container (2) having a volume for holding feed, a feed input part for providing a feed input into the feed container, a feed valve (22) which is connected to the feed input part and the feed container, wherein the feed valve is configured to regulate and control the flow of feed into the feed container, a dosing valve (25) which is connected to the feed container and controls and regulates the flow of feed out of the container, a first feed sensor (23) which is configured to provide a first parameter representing an amount of feed inside the feed container,
where the feed valve and/or the dosing valve are configured to be controlled by a control signal that is at least partly based on the first parameter.

## Description

### TECHNICAL FIELD

### Feeder for precision dosing of livestock feed

### BACKGROUND

With the development of the agricultural economy, the keeping of livestock industry faces constant challenges in the areas of economy, environment and welfare, this may especially be relevant for the pig industry.

At present, in the breeding process of pigs, cattle ,sheep, etc., most of the breeding personnel need to manually feed on time, which requires a large amount of human resources, and in the process of feeding, most of the breeders decide the weight of the feed by experience. This can result in waste of feed, which leads to an increase in farming costs.

WO 2010/025526 discloses a feed delivery system in which livestock are supplied with feed from one or more trough feeders. The system includes a feed conveyor for conveying particulate feed lo the trough feeders, a plurality of drop tubes extending from the lead conveyor to a position above the trough feeders, and an elevated flow sensor disposed in the path of feed between each drop tube and trough feeder. The flow sensors are adapted to measure the flow rate of feed into each trough feeder upon impact with the flow sensors.

WO2013/062500 discloses a device catering for the dietary needs of animals. Feed is stored in a hopper and distributed at intervals to the animal's feeding receptacle via an internal dispensing mechanism using a flexible rotor sealing against the walls of a housing to both meter the feed and seal against contamination. The quantities and delivery times may be set by the user. An optional weighting system can be provided to increase accuracy of delivered feed amounts.

Thus, there is a need for an improved system for providing a controlled feeding of animals.

### GENERAL DESCRIPTION

In accordance with the present description, there is provided a feeder comprising: a feed container having a volume for holding feed, a feed input part for providing a feed input into the feed container, a feed valve which is connected to the feed input part and the feed container, wherein the feed valve is configured to regulate and control the flow of feed into the feed container, a dosing valve which is connected to the feed container and controls and regulates the flow of feed out of the container, a first feed sensor which is configured to provide a first parameter representing an amount of feed inside the feed container, where the feed valve and/or the dosing valve are configured to be controlled by a control signal that is at least partly based on the first parameter.

This means that the feeder may be capable of controlling the flow of feed into the container, and/or out of the container, using a measurement of the feed which is in the container. The feed input may be a feed line, a hopper, or any type of device that is allows the feed to be introduced into the container. The container is configured to hold a predetermined amount of feed, where the volume of the container may provide the upper limit for how much feed may be positioned inside the container. However, in accordance with the invention, the container may however be used as a feed buffer, where the open or closed status of the feed valve controls the introduction of feed into the container. In order to fill up the feed container, the feed valve may be opened, and when a predetermined amount of feed is in place inside the container, the feed sensor will register the amount and the feed valve will close off and prevent more feed from entering the feed container. The predetermined amount of feed may e.g. be a daily dose of feed for one or more animals.

The dosing valve may be utilized to release a predetermined amount of feed out of the container, where the predetermined amount may be configured by an operator of the system. The dosing regimen may be determined, and the feeder may be adapted to provide the predetermined dosing regime, by providing a periodic dose to the animal, by releasing feed from the feed container via the dosing valve.

Thus, it may be possible to both monitor and control the feeding of livestock animals, such as pigs, sheep, cattle, or other species of animals, and it may thereby be possible to optimize the feeding regime to optimize the nutritional intake of the animals.

The feed valve may be positioned downstream from the feed input part, and upstream from the feed container. The feed container may be positioned downstream from the feed valve and upstream from the dosing valve.

In one embodiment the feeder comprises a dispensing part configured to dispense feed from the feed container, where the dispensing part is optionally positioned downstream from the dosing valve. The dispensing part may be e.g. a dispensing tube, dispensing pipe, dispensing coupling, dispensing connection, or any type of output device which may be used to dispense feed from the feeder.

In one embodiment the feeder comprises a controller, where the controller input is configured to be the first parameter and where the controller output configured to be the control signal for the feed valve and/or the dosing valve. The controller may be any kind of controller, where the controller may have an input from the first parameter, which may be a signal from a feed sensor, and where the controller uses the first parameter to open or close the feed valve and/or the dosing valve, or maintain the feed valve and/or the dosing valve in their respective positions, i.e. open or closed. The controller may be a microcontroller, where the microcontroller may be capable of receiving a plurality of inputs, and providing a plurality of outputs based on rules or algorithms that may be programmed into the microcontroller. The algorithms may e.g. be based on a dosing regimen of an animal, and where the rules and/or algorithms may use the first parameter, or any other available input, to control the feed valve and/or the dosing valve. The controller may be connected to one or more feeders in accordance with the description, where one controller may control a plurality of feeders, and receive first parameters from a plurality of feed sensors. Alternatively, each feeder may be provided with one controller, where the controller only controls the valves of one feeder and receives a first parameter, or other parameters, from one feeder.

The controller may be connected to a computer network, where a user may change or adjust the rules and/or algorithms of the controller from a centralized position. The computer network may be connected to a plurality of feeders and a plurality of controller, or the computer network may be configured to operate as the controller for the feeder. The controller may be connected via a wired and/or a wireless connection to one or more other feeders, and/or to one or more networks, depending on the configuration of the user.

In one embodiment the feeder comprises a trigger sensor. The trigger sensor may be adapted in such a manner that the animal to be fed may activate the trigger sensor in order to provide a trigger parameter which may be used to control the dosing valve and/or the feed valve. Thus, the animal may activate the trigger sensor in order to initiate a predetermined dose of feed, if this is allowed by the user. The trigger parameter may e.g. be utilized as an input into a controller, where the controller receives the trigger parameter, and based on the rules and/or algorithms the controller may or may not activate the dosing valve.

In one embodiment the feeder comprises a display. The display may be utilized to provide a user with information relating to the feeder, such as dosing regime, display the position of the in the system, i.e. I.D. tag, the humidity of the feed in the container and the amount of feed in the container etc, to facilitate statistics by technician.

In one embodiment feeder comprises a memory unit. The memory unit may be utilized to store information relating to the dosing regime, rules for operating the feeder, information relating to past feeding regimes, or other information relating to past activities.

In one embodiment the feeder comprises a trough having a second feed sensor configured to provide a second parameter, where the control signal of the feed valve and/or the dosing valve may optionally be configured to be at least partly based on the second parameter. The second feed sensor may e.g. positioned in a trough, where the second feed sensor may register the amount of feed in the trough, and the change of amount of feed in the trough. This allows the user to monitor the eating habits of an animal, especially the eating habits of a small dosage of feed, where the speed of eating, the time of eating, and the amount of eating may be monitored. Furthermore, the second parameter may be utilized to prevent the dosing valve to be activated, so when there is a predetermined amount of feed in the trough, the feeder will not release the next dosage. This may e.g. indicate that the dosage regime may be incorrect for the animal.

In one embodiment the dosing valve is a rotor valve. The rotor valve may be of such a kind, where the rotation of the valve in one direction will control flow of feed out of the feed container where a certain amount of rotation of the valve will release a certain volume. E.g. a quarter turn will release a predefined volume of feed, and where a half turn will release a double amount.

In one embodiment the rotor valve has a predefined dosing amount. The rotor valve may be adapted so that a certain amount of rotation of the valve will release a certain volume of feed. E.g. a quarter turn will release a predefined volume of feed, and where a half turn will release a double amount, compared to a quarter turn. As an example, if the animal is to be fed 2 kg of feed at a certain time, the rotor valve may rotate 10 revolutions to release 2 kg. Thus, each revolution may be approximately 200 g, and a quarter turn may therefore be 50 g, and a 1/8 turn may be 25 g, and so on.

In one embodiment the first feed sensor and/or the second feed sensor is a weight sensor. The first feed sensor may be a sensor that is adapted to weigh the amount of feed inside the container. The weight sensor may be positioned in the bottom of the container in order to weigh the received feed, but may also be adapted to weigh the container from the top of the container. I.e. the weigh sensor may be connected to a base, where the base is close to the top of the feeder, and the container, and maybe other parts of the feeder are suspended below the weight sensor. Thus, when feed is introduced into the container, the change in weight of the items that are suspended below the weight sensor may be registered, and the difference of weight may be registered as the weight of the feed. I.e. the weight of the items suspended without any feed may be zeroed so that when feed is introduced into the container the weight is registered, and as the difference in weight is only the feed introduced, the weight of the feed may be determined. Furthermore, when feed is fed out of the container, the total weight suspended will be registered, and as the "dry" weigh of the items is known, the difference will be the weight of the feed. The second feed sensor may weigh the feed in a trough, where the weight sensor may be any kind that can measure the weight of the feed inside the trough.

In one embodiment the feeder is an animal livestock feeder. The system may be utilized for any kind of livestock, where the feeder can dose a predefined amount of feed to a certain animal species. The livestock may be sheep, cattle, pigs, rabbits, horses, deer, donkeys, or any conceivable livestock that may need a controlled feeding regime.

In one embodiment the feeder comprises an identification sensor. The identification sensor may be utilized to feed specific animals, if e.g. the feeder may be accessed by a number of animals. Thus, the animals may come towards the feeder, and the identity may e.g. be registered by a proximity sensor, such as RFID tags, bar codes, or any suitable identification method, and when the animal comes into the vicinity of the feeder, the dosing valve may open to provide the specific animal with a specific amount of feed, and where this may be registered either locally in the feeder (using a memory) or where the information may be transferred onwards to a centralised system.

In one embodiment the feeder comprises a housing, where the housing may house one or more elements of the feeder, the elements chosen from a group of, the container, the first and/or the second feed sensor, the feed valve, the dosing valve, the dispensing part, the display, the memory, the trigger sensor, the identification sensor or the controller.

The present description also relates to a feeding system comprising one or more feeders, where the system comprises a feed storage and a feed line to transport feed from the feed storage to one or more feeders.

The present description also relates to a method of operating a feeder, where the method comprises: providing a feed container having a volume for holding feed, providing a feed input part for providing a feed input into the feed container, providing a feed valve which is connected to the feed input part and the feed container, wherein the feed valve is configured to regulate and control the flow of feed into the feed container, providing a dosing valve which is connected to the feed container and controls and regulates the flow of feed out of the container, providing a first feed sensor device which to provide a first parameter representing an amount of feed inside the feed container, generating a control signal for the feed valve and/or the dosing valve based at least partly on the first parameter.

Optionally, the feeder body further includes a display screen disposed on the dispenser, the display screen is coupled to the controller.

Optionally, the feeder body further includes a reader disposed on the dispenser for reading farm animal information, the reader is coupled to the controller.

Optionally, the feeder body further includes a trigger sensor disposed on the dispenser, the trigger sensor is coupled to the controller.

Optionally, the controller is a microcontroller.

Optionally, the controller comprises a PCB control board.

Optionally, a storage unit for storing farm animal information is disposed on the controller.

Optionally, the feeder further includes a control terminal, and the controller is connected to the control terminal.

Further optionally, the controller is connected to the control terminal by a control gateway and a black box respectively.

Optionally, the feeder further includes a trough disposed under the discharging pipe, the trough is provided with a weight sensor, and the weight sensor is connected to the controller.

An exemplary operation of the feeder may be where the feed input of the feeder may have a constant transport of feed toward the feeder, where the feed input may be transported from a feed storage, such as a feed silo. The feed input is therefore adapted to transport feed towards the feeder. The feed valve may be configured to open and close, so when the feed valve is open the feed may be introduced into the container, and where the feed valve is closed, the feed valve prevents feed to enter the container via the feed input. Initially the feed valve may open, allowing feed to be introduced into the container up to a predetermined amount, e.g. a predetermined weight. The predetermined amount may e.g. be the daily dose of feed to one or more animals. When the predetermined amount has been introduced into the container, the feed sensor registers the amount of feed inside the container and based on this weigh the feed valve may be closed off.

One method of feeding animals may be to provide the animals with a periodic dose of feed, in order to distribute the feeding of the animal over a longer period, where the daily dose may be divided into a plurality of smaller doses, where these doses are given to the animal periodically over a given period. The present feeder may be capable of dividing the daily dose into smaller doses, where the dosing valve may be operated periodically to release a predetermined amount of feed to the animal, where the periodical dose may occur at predefined feed times for the animal. Thus, the dosing valve may release a dose of feed to the animal at e.g. a predefined time, and where the dosing valve only releases a part of the daily dose of the animal. The first feed sensor then registers the amount of feed left in the container and may e.g. control the dosing valve based on the weight of the feed inside the container. I.e. when the dosing valve has released a predetermined amount, which may be registered by the first feed sensor, the dosing valve closes off. Alternatively, the dosing valve may be a rotational valve, where a predetermined rotation of the valve releases a certain amount and/or volume of feed out of the container.

Optionally, the feeder may comprise a trough, where the trough may comprise a second feed sensor providing a second parameter, where the dosing valve releases a portion of the daily dose into the trough, and the second feed sensor can register the amount of feed and can further monitor the rate and/or whether the animal is eating the food. Thus, if the animal has not eaten its periodic dose, the second feed sensor may register that the feed is still in the trough, and this second parameter may be used to prevent the dosing valve to release the next dose.

When the feed has been at least partly emptied from the container via the dosing valve, the first feed sensor may register the low level of the feed in the container, and based on the output of the first feed sensor the feed valve may open in order to replenish the feed inside the container.

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

### BRIEF DESCRIPTION OF THE DRAWINGS

The following is an explanation of exemplary embodiments with reference to the drawings, in which
Fig. 1 is a first schematic view of the structure of the feeder provided by the present disclosure,
Fig. 2 is a second schematic view of the structure of the feeder provided by the present invention,
Fig. 3 shows a side view of a feeding system, and
Fig. 4 shows a schematic diagram of a feeder or a feeding system.

### DETAILED DESCRIPTION

The feeder will now be described in accordance with the embodiments shown in the drawings. The disclosed embodiments are to be considered in all respects as illustrative and not restrictive. The scope of the present invention is not limited by the description of the embodiments, but the scope of the claims, and also includes all modifications within the scope of the claims.

The structure of the cold-rolled plate type detecting system provided by the present invention will be described below with reference to specific embodiments.

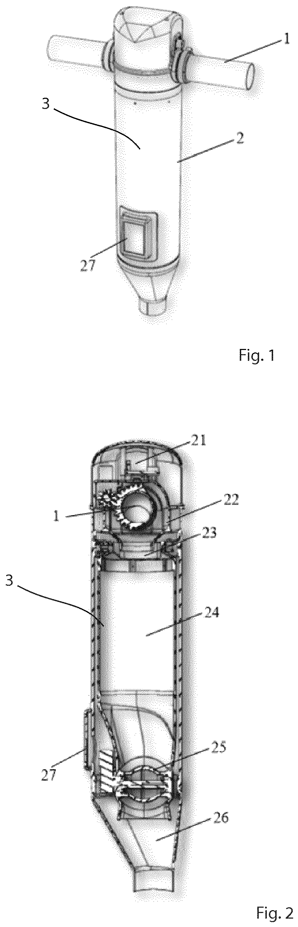

As shown in Fig. 1 and Fig. 2, the present invention provides a feeder comprising a feed line 1 and a feeder body 2, and the feeder body 2 includes a controller 21, a discharge valve 22, a weighing sensor 23, and a dispenser 24, the rotor dosing valve 25 and the discharge pipe 26, wherein the feed line 1 is connected to the controller 21, and the feed line 1 and the controller 21 are respectively connected to the discharge valve 22 and the weighing sensor 23 is disposed between discharge valve 22 and the dispenser 24, a rotor dosing valve 25 is disposed between the dispenser 24 and the discharge pipe 26, and the weighing sensor 23 and the rotor dosing valve 25 are respectively connected to the controller 21.

Illustratively, the controller 21 could be a microcontroller or a controller 21 including a PCB control board; exemplarily, a pipe having a diameter of 140mm may be used as the dispenser.

Illustratively, during using the feeder, when it is desired to feed the cultured animal, the feeding line 1 is controlled by the controller 21, and the feed is drawn from the silo while the discharge valve 22 is opened by the controller 21, the feed is passed through the weighing sensor 23 into the dispenser 24, and the weighing 23 transmits the weight signal of the feed to the controller 21, and when the feed weight entering the dispenser 24 reaches the desired feed, the controller 21 controls the feeding line 1 and the discharge valve 22. The transport of the feed is stopped and the discharge valve 22 is closed, at the same time, during the feeding process, the controller 21 also controls the opening of the rotor dosing valve 25 to allow the feed to be discharged through the discharge pipe 26 for consumption by the animal. In this way, in the process of using the feeder, the keeper can simply put the feed through controlling the controller 21, and does not need to transport the feed in person, and can also accurately control the weight of the feed by the controller 21, thereby avoiding waste of feed.

In the feeder provided by the embodiment of the present invention, the feeding line 1 and the feeder body 2 are included , and the feeder body 2 includes a controller 21, a discharge valve 22, a weighing sensor 23, a dispenser 24, and a rotor dosing valve 25 and discharge pipe 26, wherein the feeding line 1 is connected to the controller 21, and the feeding line 1 and the controller 21 are respectively connected to the discharging valve 22, and the weighing sensor 23 is disposed between the discharging valve 22 and the dispenser 24, the rotor dosing valve 25 is disposed between the dispenser 24 and the discharge pipe 26, and the weighing sensor 23 and the rotor dosing valve 25 are respectively connected to the controller 21. This allows the feeding line 1 to be controlled by the controller 21 to draw the feed from the silo while using the feeder, at the same time, the discharge valve 22 is opened by the controller 21, so that the feed enters the dispenser 24 through the weighing sensor 23, and the weighing sensor 23 transmits the weight signal of the feed to the controller 21, and when the feed weight entering the dispenser 24 reaches the desired feed, the controller 21 controls the feeding line 1 and the discharge valve 22 and stops transporting the feed and closes the discharge valve 22. At the same time, during the process of feeding, the controller 21 also controls the opening of the rotor dosing valve 25 to allow the feed to be discharged through the discharge pipe 26 for consumption by the animal. In this way, in the process of using the feeder, the keeper can simply put the feed through controlling the controller 21, and does not need to transport the feed in person, which greatly saves the labor cost, reduces the breeding cost, and can also precisely controls the weight of the feed by controller 21, avoids waste of the feed, thereby further reducing the cost of breeding.

Illustratively, as shown in Fig. 2, the feeder body 2 may further includes a display screen 27 disposed on the dispenser 24, the display screen 27 is coupled to the controller 21.specifically, the display screen 27 can display the temperature of the culture environment in which the feeder is placed, the humidity and the amount of feed in the feeder etc., to facilitate statistics by technician.

Optionally, the above feeder may further include a control terminal (not shown) and the controller 21 is connected to the control terminal. Illustratively, the controller 21 can be wirelessly connected to the control terminal, specifically, the control terminal can be mobile terminal such as a mobile phone or a computer.

Exemplarily, the controller 21 can be connected to the control terminal through a control gateway and a black box respectively. When the controller 21 cannot be connected to the control terminal due to a malfunction, it can automatically run through the information in the black box until it is reconnected with the control terminal, thereby preventing the farmed animal from breaking feed.

Alternatively, the feeder body 2 may further includes a reader(not shown) provided on the dispenser 24 for reading information on the cultured animals, the reader is coupled to the controller 21. Illustratively, the reader can be placed on the side of the feeder 24 towards the farmed animal, when the farmed animal wants to eat near the feeder, the farmed animal label can be read by the reader to obtain the information of the farmed animal, and the information of the farmed animal can be transmitted to the control terminal through the controller, and the technician can obtain the information of the farmed animal through the control terminal without going to the farm in person.

Illustratively, the above reader may be a radio frequency reader, and correspondingly, a radio frequency tag may be set on the farmed animal to facilitate management of the farmed animal.

In addition, the controller 21 is further provided with a storage unit for storing farmed animal information, so that the farmed animal information read by the reader can be stored in the controller 21 , so that the technician can view the research in the future.

Alternatively, the feeder body 2 may further includes a trigger sensor(not shown) disposed on the dispenser 24, the trigger sensor is coupled to the controller 21. Illustratively, when the farmed animal wants to eat near the feeder, the trigger sensor can be activated, and the trigger sensor transmits a trigger signal to the controller 21, and the controller 21 can transmit the signal back to the control terminal, and the control terminal can send feeding instruction to the controller 21 according to the signal, and the feed is placed by the controller 21.

Further optionally, the above-mentioned feeder may further includes a trough(not shown) disposed under the discharge pipe 26, and a weighing sensor may be disposed on the trough to collect the remaining feed weight information in the trough, and the weight sensor can be connected to the controller 21 so that the remaining feed weight information in the trough can be transmitted to the controller 21 and transmitted to the control terminal through the controller 21, so that the technician can control the weight of the delivered feed. In addition, the weighing sensor can also be directly connected to the control terminal.

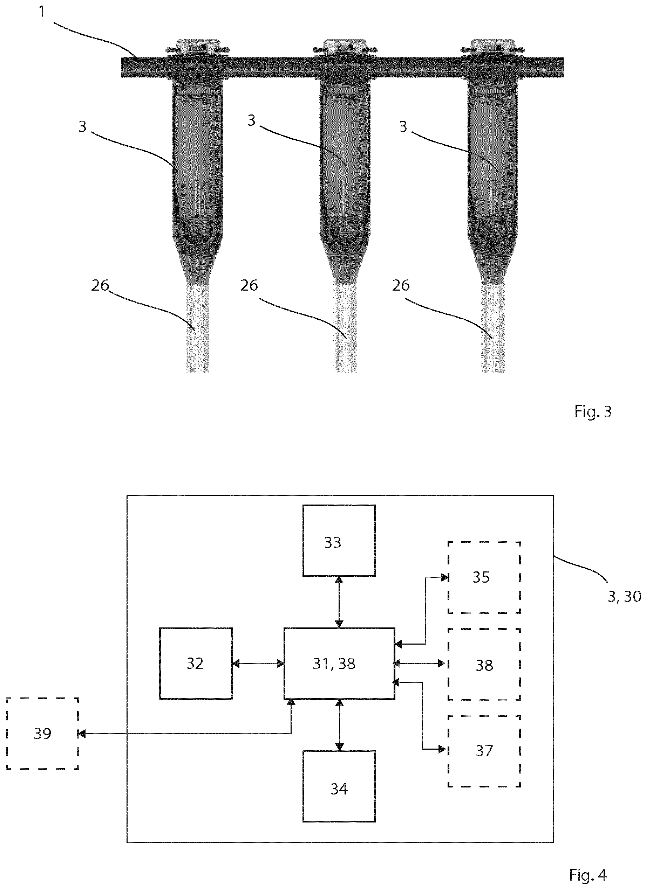

Fig. 3 discloses a side view of a feeding system, where the feeding system comprises at least three feeders 3, where the three feeders are connected to each other via a common feed line 1. Each of the discharge parts 26 may be introduced into one pen, where each pen (not shown) holds one or more animals, where each feeder may be individually configured to feed the one or more animals in each pen.

Fig. 4 shows a schematic diagram of a feeder 3 and/or a feeding system 30. In one embodiment, where the controller 31 is a part of the feeder 3, the first feed sensor 32 may provide input to the controller 31, and the feed valve 33 and the dosing valve 34 may be controlled by the controller 31, and the controller 31 may monitor the status of the feed valve 33 and the dosing valve 34. Furthermore, optional input/or outputs may be provided by the trigger sensor 35, a second feed sensor 36 and an ID sensor 37.

In another embodiment, where the controller 39 of the feeder may be centralized, e.g. as part of a feeding system where one centralized controller 39 may control a plurality of feeders, the feeder 30 may be provided with a controller interface 38, where the controller interface may be utilized to communicate with a centralized controller, and where the controller interface 38 provides the communication for the first feed sensor 32, feed valve 33, the dosing valve 34, and optionally to the trigger sensor 35, a second feed sensor 36 and an ID sensor 37. Further types of inputs and/or outputs may be envisioned by the present invention, where the parts of the feeder may be introduced to communicate with the controller 31 or the controller interface 38.

After considering the specification and practice of the feeder disclosed here, technicians in this field can easily think of another implementation plans of the feeder. The present application is intended to cover any variations, uses or adaptive changes of the present invention, which are in accordance with the general principles of the invention and include common general knowledge or common technical means in this technical field that is not disclosed. The specification and examples are to be regarded as illustrative only. The true scope and spirit of the disclosure are indicated by the claim.

It is to be understood that the invention is not limited to the embodiment of the invention, the structure and the precise structure shown in the drawings, and various modifications and changes can be made without departing from the scope thereof. The scope of the invention is to be limited only by the appended claims.

### ITEMS

1. A feeder comprises a feed line and a feeder body, the feeder body comprises a controller, a discharge valve, a weighing sensor, a dispenser, a rotor dosing valve and a discharge pipe, wherein, the feed line is connected to the controller, and the feed line and the controller are respectively connected to the discharge valve and the weighing sensor is disposed at the discharge valve and dispenser, the rotor dosing valve is disposed between the dispenser and the discharge pipe, and the weighing sensor and the rotor dosing valve are respectively connected to the controller.
2. The feeder of item 1 wherein said feeder body further comprises a display screen disposed on said dispenser, the said display screen is coupled to the said controller.
3. The feeder according to item 1, wherein said feeder body further comprises a reader disposed on said dispenser for reading information of farm animal, said reader and said controller are connected.
4. The feeder of item 1, wherein said feeder body further comprises a trigger sensor disposed on said dispenser, said trigger sensor is coupled to said controller.
5. The feeder of item 1, wherein said controller is a microcontroller.
6. The feeder of item 1, wherein said controller comprises a PCB control board.
7. The feeder according to item 1, wherein said controller is provided with a storage unit for storing farming animal information.
8. The feeder of item 1, wherein said feeder further comprises a control terminal, said controller is coupled to said control terminal.
9. The feeder according to item 8, wherein said controller is connected to said control terminal via a control gateway and a black box respectively.
10. The feeder according to item 1, wherein the feeder further comprises a trough disposed under the discharge pipe, the trough is provided with a weighing sensor, the weighing sensor and the controller are connected.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

### Listing of references

- 1: Feeding line
- 2: Feeder body
- 3: Feeder
- 21: Controller
- 22: Discharge valve
- 23: Weighing sensor
- 24: Dispenser
- 25: Rotor dosing valve
- 26: Discharge pipe
- 27: Display
- 30: Feeding system
- 31: Controller
- 32: First feed sensor
- 33: Feed valve
- 34: Dosing valve
- 35: Trigger sensor
- 36: Second feed sensor
- 37: ID sensor
- 38: Controller interface
- 39: Controller centralized

## Claims

1. A feeder comprising:
- a feed container having a volume for holding feed,
- a feed input part for providing a feed input into the feed container,
- a feed valve which is connected to the feed input part and the feed container, wherein the feed valve is configured to regulate and control the flow of feed into the feed container,
- a dosing valve which is connected to the feed container and controls and regulates the flow of feed out of the container,
- a first feed sensor which is configured to provide a first parameter representing an amount of feed inside the feed container,
where the feed valve and/or the dosing valve are configured to be controlled by a control signal that is at least partly based on the first parameter.

2. A feeder in accordance with claim 1, wherein the feeder comprises a dispensing part configured to dispense feed from the feed container, where the dispensing part is optionally positioned downstream from the dosing valve.

3. A feeder in accordance with any of the preceding claims, wherein the feeder comprises a controller, where the controller input is configured to be the first parameter and where the controller output configured to be the control signal for the feed valve and/or the dosing valve.

4. A feeder in accordance with any of the preceding claims, wherein the feeder comprises a trigger sensor.

5. A feeder in accordance with any of the preceding claims, wherein the feeder comprises a display.

6. A feeder in accordance with any of the preceding claims, wherein feeder comprises a memory unit.

7. A feeder in accordance with any of the preceding claims, wherein the feeder comprises a trough having a second feed sensor configured to provide a second parameter, where the control signal may optionally be configured to be at least partly based on the second parameter.

8. A feeder in accordance with any of the preceding claims, wherein the dosing valve is a rotor valve.

9. A feeder in accordance with claim 8, wherein the rotor valve has a predefined dosing amount.

10. A feeder in accordance with any of the preceding claims, wherein the first and/or the second feed sensor is a weight sensor.

11. A feeder in accordance with any of the preceding claims, wherein the feeder is an animal livestock feeder.

12. A feeder in accordance with any of the preceding claims, wherein the feeder comprises an identification sensor.

13. A feeder in accordance with any of the preceding claims, wherein the feeder comprises a housing, where the housing may house one or more elements of the feeder, the elements chosen from a group of, the container, the first and/or the second feed sensor, the feed valve, the dosing valve, the dispensing part, the display, the memory, the trigger sensor, the identification sensor or the controller.

14. A feeding system comprising one or more feeders in accordance with any of the preceding claims, where the system comprises a feed storage and a feed line to transport feed from the feed storage to one or more feeders.

15. A method of operating a feeder, where the method comprises
- providing a feed container having a volume for holding feed,
- providing a feed input part for providing a feed input into the feed container
- providing a feed valve which is connected to the feed input part and the feed container, wherein the feed valve is configured to regulate and control the flow of feed into the feed container,
- providing a dosing valve which is connected to the feed container and controls and regulates the flow of feed out of the container,
- providing a first feed sensor device which to provide a first parameter representing an amount of feed inside the feed container,
- generating a control signal for the feed valve and/or the dosing valve based at least partly on the first parameter.
